# NEUE EUROPÄISCHE PATENTSCHRIFT

(11) **EP 0 916 040 B2**
(45) Veröffentlichungstag und Bekanntmachung des Hinweises auf die Entscheidung über den Einspruch: **02.01.2003**
(45) Hinweis auf die Patenterteilung: 26.04.2000
(21) Anmeldenummer: 97935499.0
(22) Anmeldetag: 29.07.1997
(51) Int. Cl.: F16F 15/18, B60K 17/22, H02K 7/10

(54) **ELEKTRISCHE MASCHINE IN EINEM ANTRIEBSSTRANG, Z.B. EINES KRAFTFAHRZEUGES, UND VERFAHREN ZU DEREN BETREIBEN**
ELECTRIC MACHINE IN A DRIVING TRAIN, FOR EXAMPLE OF A MOTOR VEHICLE, AND PROCESS FOR DRIVING THE SAME
MOTEUR ELECTRIQUE DANS UNE CHAINE CINEMATIQUE, PAR EXEMPLE D'UN VEHICULE A MOTEUR, ET SON PROCEDE D'UTILISATION

(30) Priorität: 02.08.1996 DE 19631384
(43) Veröffentlichungstag der Anmeldung: 19.05.1999
(73) Patentinhaber: Continental ISAD Electronic Systems GmbH & Co. oHG, 86899 Landsberg/Lech (DE); Bayerische Motoren Werke Aktiengesellschaft, 80788 München (DE)
(72) Erfinder: PELS, Thomas, D-50735 Köln (DE); ZEYEN, Klaus-Peter, D-50670 Köln (DE); MASBERG, Ullrich, D-51503 Rösrath (DE); POUR, Rahim, D-85748 Garching (DE); MAURER, Michael, D-80995 München (DE); BIRZL, Willibald, D-86668 Karlshuld (DE); WALL, Wolfgang, D-85604 Zorneding (DE)
(74) Vertreter: von Samson-Himmelstjerna, Friedrich R., Dipl.-Phys.
(86) Internationale Anmeldenummer: DE9701628
(87) Internationale Veröffentlichungsnummer: WO98005882

(56) Entgegenhaltungen:
- DE-A- 3 009 279
- DE-A- 4 100 937
- DE-A- 4 215 441
- DE-A- 4 323 601
- DE-C- 688 630
- DE-C- 1 680 669
- US-A- 4 471 248
- US-A- 4 699 097

## Beschreibung

Die Erfindung betrifft eine Antriebsanordnung mit einem Antriebsstrang und einer dazu funktionell parallel geschalteten elektrischen Maschine, nach dem Oberbegriff von Anspruch 1. Ferner betrifft die Erfindung ein Verfahren zum Betreiben einer derartigen Antriebsanordnung insbesondere in einem Kraftfahrzeug.

Aufgrund der diskontinuierlichen Arbeitsweise treten bei Verbrennungskolbenmotoren eine Vielzahl unterschiedlicher Schwingungserscheinungen auf. Besonders bemerkbar machen sich die durch Drehmomentschwankungen des Verbrennungsmotors verursachten Drehschwingungen im Antriebstrang eines Kraftfahrzeuges. Diese pflanzen sich über die übrigen Fahrzeugkomponenten fort und führen zu einem für die Fahrzeuginsassen störenden Geräusch- und Vibrationspegel. Bedeutsam sind auch die durch Massenkräfte des Verbrennungsmotors hervorgerufenen Linearschwingungen des ganzen Motorblockes, die sich ebenfalls über den Antriebsstrang ausbreiten können.

Zur Minderung der genannten Drehschwingungen schlägt die DE-A-4 100 937 eine Antriebsanordnung der eingangs genannten Art vor. Dort ist im Antriebsstrang eines Kraftfahrzeuges zwischen dessen Verbrennungsmotor und dessen Getriebe ein passiver Drehschwingungsdämpfer angeordnet, der ein vom Verbrennungsmotor angetriebenes Eingangsteil und ein auf einer Eingangswelle des Getriebes sitzendes Ausgangsteil aufweist, welches über eine Federung drehelastisch mit dem Eingangsteil verbunden ist. Ferner ist im Antriebsstrang hinter dem genannten passiven Drehschwingungsdämpfer ein aktiver Drehschwingungsdämpfer in Form einer elektrischen Maschine vorgesehen, deren Rotor auf der Eingangswelle des Getriebes sitzt und den am Ausgang des Drehschwingungsdämpfers noch verbleibenden Drehmomentschwankungen entgegenwirkt.

Die bekannte Anordnung ist jedoch in der Praxis häufig wegen des geringen Platzangebots im Antriebsbereich eines Kraftfahrzeuges nicht einsetzbar.

Ferner ist aus der DE-A-4 406 481 ein Starter/Generator bekannt, dessen Rotor auf einer rotierenden Welle eines Antriebsaggregates, z.B. einer Kurbelwelle eines Verbrennungsmotors, sitzt und zugleich als passiver Drehschwingungstilger ausgebildet ist. Dabei besteht der Rotor beispielsweise aus einer ringartigen - über eine Gummischicht elastisch angekoppelten - Tilgermasse, die gegenüber der rotierenden Welle im Rahmen der elastischen Ankopplung drehbeweglich ist. Die elastische Kopplung unterbricht im Gegensatz zur Schwingungsisolierung nicht etwa den Drehmomentweg der Welle: die Welle ist vielmehr starr durchgehend. Sie dient nur der Ankopplung der freien Tilgermasse.

Der Tilgereffekt beruht auf einer Verstimmung des Schwingungssystems, indem das Grundsystem mit der Tilgermasse einen zusätzlichen Freiheitsgrad erhält und sich dadurch die Resonanzfrequenzen verschieben. Vollwirksam ist diese Maßnahme jedoch nur, wenn die Erregung des Grundsystems lediglich mit fester Frequenz in Nähe der (unverschobenen) Resonanz erfolgt. Da Verbrennungsmotoren meist mit variabler Drehzahl betrieben werden, sind bei einer praktisch realisierbaren Anzahl von Schwingungstilgern Resonanzen dennoch unvermeidbar.

Auch die DE-U-29 502 906 offenbart eine Antriebsanordnung der eingangs genannten Art mit einer zu dem Antriebsstrang funktionell parallel geschalteten elektrischen Maschine, welche u.a. zum Starten eines Verbrennungsmotors sowie zum Antreiben, Bremsen und Synchronisieren des Antriebsstranges verwendet wird. Hierfür ist der Rotor der elektrischen Maschine antriebsseitig über eine Trennkupplung mit der Kurbelwelle des Verbrennungsmotors stellbar. Abtriebsseitig ist der Rotor der elektrischen Maschine starr oder drehelastisch auf der Eingangswelle des Getriebes gelagert. Die drehelastische Befestigung auf der Getriebeeingangswelle wird dadurch realisiert, daß der Rotor von an sich üblicher Bauweise in einem Schwenklager auf der Eingangswelle geführt und über eine torsionselastische Feder mit der Eingangswelle verbunden ist.

Ferner beschreibt die WO 90/01126 noch einen Schwingungstilger üblicher Bauart, wie er häufig im Automobilbau eingesetzt wird.

Aus der DE-A-4 036 301 ist noch ein System zur aktiven Schwingungsdämpfung bekannt, bei welchem über Einwirkung der Lichtmaschine eines Kraftfahrzeuges Störschwingungen im Antriebsstrang des Kraftfahrzeuges kompensiert werden.

Aus DE-A-4 323 601 ist ferner eine Antriebsanordnung mit einem aus Kurbelwelle und Getriebeeingangswelle bestehenden Antriebsstrang und einer dazu funktionell parallel geschalteten elektrischen Maschine bekannt, die einen Startor und einen als Außenläufer ausgebildeten Rotor aufweist. Bei der bekannten Anordnung sind außerdem ein oder mehrere Torsionsdämpfer in an sich bekannter Weise in einer Trennkupplung zum Einkuppeln der Getriebeeingangswelle eingebaut. Diese Torsionsdämpfer sind aber nicht als Bestandteil des Rotors ausgebildet und wirken demgemäß nicht unmittelbar den störenden Drehungleichförmigkeiten des Antriebsstranges entgegen. Ein weiterer Torsionsdämpfer ist als elastische Verbindung des Rotors mit der Getriebeeingangswelle an der Rotornabe nach Art eines passiven Drehschwingungstilgers vorgesehen.

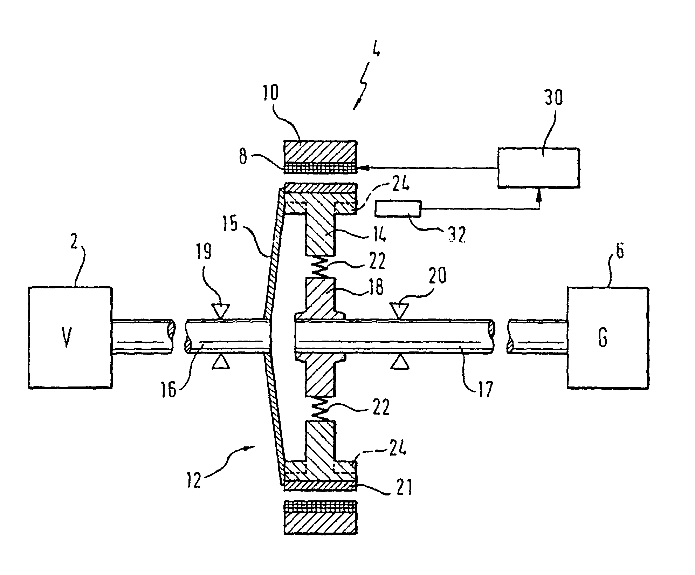

Aus der DE-A-3 009 279 ist eine damit vergleichbare Antriebsanordnung bekannt. In der Figur 1 dieser Druckschrift ist ein Element in der Darstellung einer Kupplung der Antriebsanordnung eingezeichnet, welches als elastisches Federelement interpretiert werden kann. Der Rotor der elektrischen Maschine selbst weist zusätzlichen keine Dämpfungs- oder Federelemente auf.

Desweiteren sind aus DE-C-1 680 669 und DE-C-688 630 verschiedenartige Kupplungen mit integrierten Federelementen bekannt.

Die Erfindung zielt darauf ab, ein verbessertes Antriebssystem mit Schwingungsisolierungseigenschaften zur Verfügung zu stellen.

Dieses Ziel erreicht die Erfindung durch den Gegenstand gemäß Anspruch 1.

Danach umfaßt die erfindungsgemäße Antriebsanordnung einen Antriebsstrang und eine dazu funktionell parallel geschaltete elektrische Maschine, die einen Stator und einen vorzugsweise auf einer Welle, z.B. auf einer Kurbelwelle eines Verbrennungsmotors oder einer damit gekoppelten Welle, sitzenden Rotor aufweist, der im Drehmomentweg des Antriebsstranges angeordnet ist, wobei im Drehmomentweg des Antriebsstranges eine Schwingungsisolierung eingefügt ist und der Rotor der elektrischen Maschine bezüglich seiner elektrischen und magnetischen Funktionen innen hohl ausgebildet und die Schwingungsisolierung im Hohlraum des Rotors untergebracht ist.

Dabei ist der Rotor mit seinem radial außenliegenden Primärteil mit einer der Antriebs- und Abtriebsseite des Antriebsstranges und mit seinem radial innenliegenden Sekundärteil mit der anderen der Antriebs- und Abtriebsseite verbunden, und die Schwingungsisolierung ist zwischen dem Primärteil und dem Sekundärteil des Rotors angeordnet.

Weil der Rotor der elektrischen Maschine - was seine elektrischen und magnetischen Funktionen angeht - innen hohl ist, findet kein elektrischer und/oder magnetischer Rückfluß über die Rotorachse statt. Der Rotor ähnelt z.B. einem Hohlzylinder. Der Hohlraum im Rotor bietet Platz für die Aufnahme der Schwingungsisolierung.

Durch diese Bauweise mit radial außen angeordnetem magnetischen Rückfluß und hierzu radial innen angeordneter Schwingungsisolierung ergeben sich - insbesondere beim Einsatz in Kraftfahrzeugen - folgende Vorteile: die mit der Schwingungsisolierung kombinierte elektrische Maschine zeichnet sich durch ihre einfache und axial kompakte Bauweise aus. Durch die Integration der Schwingungsisolierung im Hohlraum des Rotors werden nicht nur Gewicht, sondern auch Abmessungen des kombinierten Systems entscheidend verringert, so daß die erfindungsgemäße mit der Schwingungsisolierung kombinierte elektrische Maschine im Motor- oder Antriebsbereich eines Kraftfahrzeuges auch bei geringem Platzangebot untergebracht werden kann. Anders als bei dem zuvor beschriebenen Schwingungsdämpfungssystem ist die Schwingungsisolierung nunmehr Teil der im Antriebsstrang angeordneten elektrischen Maschine selbst. Diese Art der Intergration impliziert ferner eine andere Platzausnutzung, nämlich in Richtung einer radialen Erstreckung der Schwungmassen der Schwingungsisolierung. Dies ist dann von Vorteil, wenn durch Erhöhung des Trägheitsmoments die Schwingungseigenschaften des Antriebsstranges variiert werden sollen. Bei gleichen Massen erzielt man bei einer solchen radialen Anordnung ein höheres Trägheitsmoment, was sich ingesamt positiv auf das Fahrzeuggewicht auswirkt.

Die Wirkung der Schwingungsisolierung innerhalb des Rotors der elektrischen Maschine beruht im wesentlichen darauf, daß z.B. ein oder mehrere elastische Koppelelemente zwischen der mit dem Antriebsaggregat verbundenen Antriebsseite des Rotors und der z.B. mit einer zum Getriebe führenden Welle verbundenen Abtriebsseite des Rotors zwischengeschaltet sind, um die Übertragung etwaiger antriebsseitiger Drehmomentschwankungen auf die Abtriebsseite zumindest weitgehend zu verhindern.

Bekanntlich wird durch den Einbau elastischer Koppelelemente zwischen Schwingungssystemen die Übertragung der Schwingungsenergie bei Erregerfrequenzen oberhalb einer Resonanzfrequenz der Schwingungssysteme dynamisch verringert. Da bei dieser Art der Schwingungsisolierung die Resonanzfrequenz kleiner als die Erregerfrequenz ist, und eine niedrige Resonanzfrequenz durch geringe Federsteifigkeit und/oder hohes Trägheitsmoment erzielt wird, nennt man diesen Betriebsbereich auch "weiche Abstimmung". Der Schwingungsisolierungseffekt beruht im wesentlichen darauf, daß die Ausgangsseite der Schwingungsisolierung der durch die Erregerquelle erzeugten Schwingungen der Eingangsseite bei weicher Abstimmung derart "hinterherhinkt", daß kein merklicher Energieübertrag stattfindet - und zwar umso weniger, je größer die Erregerfrequenz gegenüber der Resonanzfrequenz ist.

Die im Rotor integrierte Schwingungsisolierung schirmt daher den dahinter liegenden Teil des Antriebsstranges gegenüber Drehschwingungen aus dem antriebsseitigen Teil des Antriebsstrangs ab. Daneben erfolgt je nach Auslegung der Schwingungsisolierung eine Isolierung auch gegenüber Linearschwingungen aus dem Verbrennungsmotor.

Bei einer bevorzugten Variante umfaßt die im Rotor integrierte Schwingungsisolierung zwei Grundelemente, wobei eines der Grundelemente - nachfolgend Primärteil genannt - mit der Antriebsseite des Antriebsstranges, z.B. mit einer Kurbelwelle des Verbrennungsmotors, und das andere Grundelement - nachfolgend Sekundärteil genannt - mit der Abtriebsseite des Antriebsstranges, z.B. mit einer Eingangswelle des Getriebes, drehfest verbundenen ist; und die beiden Grundelemente drehelastisch miteinander gekoppelt sind. Mit anderen Worten sind die beiden Grundelemente gegeneinander drehschwingungsisoliert.

Selbstverständlich lassen sich die beiden Grundelemente im oben beschriebenen Rotor in beiden möglichen Anordnungen im Antriebsstrang einbauen, nämlich das Primärteil antriebsseitig verbunden mit dem Verbrennungsmotor und das Sekundärteil mit dem Abtrieb, oder umgekehrt. Entsprechend ist die elektrische Maschine direkt oder über die Schwingungsisolierung mit dem Verbrennungsmotor bzw. dem Abtrieb gekoppelt. Die nachfolgende Beschreibung bevorzugter Ausführungsbeispiel des Primär- und Sekundärteils gilt für beide der möglichen Anordnungen.

Auch wenn durch die bezüglich der elektrischen und magnetischen Funktionen hohle Bauweise des Rotors grundsätzlich eine weitgehende Konstruktionsfreiheit hinsichtlich der Schwingungsisolierung gegeben ist, ist der Rotor bei einer besonders kompakten Variante ringförmig ausgebildet und die Schwingungsisolierung mit ihren beiden Grundelementen hierzu konzentrisch und im Inneren des Rotors angeordnet. Auf diese Weise läßt sich eine kompakte und robuste elastische Kopplung zwischen Primär- und Sekundärteil realisieren, z.B. durch mehrere entlang des Umfangs zwischen den gegeneinander drehbar gelagerten Primär- und Sekundärteilen angeordneten Federelementen, die jeweils mit einem Ende am Primärteil und mit ihrem anderen Ende am Sekundärteil befestigt sind.

Vorteilhaft bildet der Rotor selbst eines der beiden Grundelemente der Schwingungsisolierung, z.B. das Primärteil. In diesem Fall umfaßtdie elektrische Maschine im wesentlichen drei Baugruppen, nämlich Stator, Rotor/Primärteil und Sekundärteil der Schwingungsisolierung.

Wie bereits vorstehend erwähnt, ist die dynamische Schwingungsisolierung vor allem wirksam im Bereich weicher Abstimmung, d.h. oberhalb der Resonanzfrequenz des Schwingungssystems, also bei niedriger Resonanzfrequenz. Eine solche weiche Abstimmung wird vorzugsweise dadurch erreicht, daß an dem Primärteil und/oder an dem Sekundärteil zusätzliche Schwungmassen vorgesehen sind. Diese sind ausgewuchtet, insbesondere rotationssymmetrisch, z.B. ringförmig. Durch Variation der Schwungmassen und/oder durch Variation der Steifigkeit der elastischen Kopplung lassen sich die Schwingungseigenschaften des Antriebsstranges in weitem Umfang beeinflussen. Durch das Trägheitsmoment erhöhende Zusatzmassen am Primär- und/oder Sekundärteil und/oder ggf. Wahl einer geringen Federsteifigkeit kann die Resonanzfrequenz des Schwingungssystems i.a. unter den Erregerfrequenzbereich verschoben werden. Selbst wenn die Erregerfrequenz über einen weiten Bereich variiert, wie z. B. um den Drehzahlbereich eines Verbrennungsmotors, werden durch die genannte Maßnahme zumindest Resonanzen im Bereich hoher kritischer Drehzahlen vermieden. Im Fall zweier Schwungmassen nennt man eine derartige Schwingungsisolierung auch "Zwei-Massen-Schwungrad".

Bei einer weiteren vorteilhaften Variante sind die genannten Schwungmassen nach Art eines Schwingungstilgers drehelastisch mit dem jeweiligen Primärund/oder Sekundärteil gekoppelt. Zusätzlich zu dem Schwingungsisolierungseffekt der elastischen Kopplung zwischen Primär- und Sekundärteil wird hierdurch auf einfache Weise auch ein Tilgereffekt erzielt. Hiermit kann man vorteilhaft die Resonanzfrequenz des Systems weiter in günstige Bereiche, z.B. zu niedrigeren Frequenzen hin, verschieben und ggf. die Schwingungsminderung des Systems erhöhen.

Eine weitere vorteilhafte Maßnahme zur Unterstützung der Schwingungsminderung besteht darin, Reibflächen zwischen drehelastisch gelagerten Teilen des Primär- und Sekundärteils - zumindest abschnittsweise - vorzusehen. Diese Reibflächen wirken dämpfend oder genauer energiedissipierend. Sollte trotz der zuvor genannten Maßnahmen die Resonanzfrequenz des Schwingungssystems im Drehzahlbereich des Verbrennungsmotors liegen, bewirken die Reibflächen zwischen Primär- und Sekundärteil aufgrund der Dämpfung eine Abflachung der störenden Resonanzüberhöhung.

Der Rotor der elektrischen Maschine ist vorteilhaft mit einem der beiden Grundelemente, d.h. entweder dem Primärteil oder dem Sekundärteil, drehfest gekoppelt. Bei dieser Ausgestaltung der elektrischen Maschine übernimmt das mit dem Rotor drehfest gekoppelte und gegebenenfalls einstückige Grundelement der Schwingungsisolierung keine elektrischen oder magnetischen Funktionen des Rotors. Diese beiden Teile sind also hinsichtlich dieser Funktionen funktionell entkoppelt (in mechanischer Hinsicht besteht jedoch eine funktionelle Kopplung aufgrund der Masse des Rotors, die zum Trägheitsmoment des Schwingungssystems beiträgt).

Während bei üblichen Antriebsanordnungen elektrische Maschinen, die auf einer Welle im Antriebsstrang eines Kraftfahrzeuges sitzen, einen zweiseitig gelagerten Rotor aufweisen, ist vorliegend der Rotor der elektrischen Maschine vorteilhaft nur einseitig gelagert und schafft günstigerweise einen Hohlraum für die Integration der Schwingungsisolierung. Das mit dem Rotor nicht drehfest gekoppelte Grundelement der Schwingungsisolierung weist im allgemeinen eine weitere Lagerung auf, die aber aufgrund der zwischengeschalteten elastischen Kopplung keine Lagerung des Rotors an sich (sowie des anderen Grundelements) darstellt.

Grundsätzlich kommt für die Erfindung jegliche Art elektrischer Maschine - ob Gleichstrom-, Wechselstrom-, Drehstromasynchron, Drehstromsynchron oder Linearmaschine - in betracht, die je nach Verwendungszweck ein geeignetes Drehmoment aufbringen kann. Für die Integration der Schwingungsisolierung besonders günstig ist eine Drehfeldmaschine in Asynchronoder Synchronbauweise, deren Rotor ein Kurzschlußläufer oder ein Rotor mit ausgeprägten Magnetpolen ist. Der Kurzschlußläufer bei der Asynchronmaschine kann z.B. ein hohler Käfigläufer mit Käfigstäben in Axialrichtung sein. Bei anderen Ausgestaltungen weist der Läufer Wicklungen auf, die über Schleifringe extern kurz schließbar sind. Die ausgeprägten Magnetpole des Rotors bei der Synchronmaschine erreicht man z.B. durch Permanentmagneten oder bevorzugt durch Elektromagneten, die z.B. über Schleifringe mit Erregerstrom gespeist werden.

Besonders vorteilhaft ist die elektrische Maschine der erfindungsgemäßen Antriebsanordnung als Starter zum Starten des antriebsseitig gekoppelten Verbrennungsmotors einsetzbar. Dabei wird der z. B. mit einer Kurbelwelle des Verbrennungsmotors entweder starr oder über die Schwingungsisolierung verbundene Rotor der elektrischen Maschine mit dem zum Starten des Verbrennungsmotors erforderlichen Anlaufmoment beaufschlagt, was ohne dazwischengeschaltetes Hilfsaggragat auf die Kurbelwelle übertragen wird. Auf diese Weise schafft die Erfindung vorteilhaft einen Starter mit integrierter Schwingungsisolierung, der aufgrund der Bauweise als Direktstarter besonders einfach, verschleißfrei, schnell und geräuscharm ist, da er etwaige Zusatzmittel, wie Zusatzkupplungen, Zusatzgetriebe, Freiläufe, etc. nicht benötigt.

Bevorzugt kann die elektrische Maschine der erfindungsgemäßen Antriebsanordnung auch als Generator zur Versorgung elektrischer Verbraucher des Fahrzeuges und/oder einer oder mehrerer Fahrzeugbatterien dienen. Sitzt die erfindungsgemäße elektrische Maschine mit ihrem Rotor z.B. auf der Kurbelwelle eines Kraftfahrzeug-Verbrennungsmotors und wird dieser mit dem erforderlichen Anlaufdrehmoment beaufschlagt, kann sie beim Starten als Motor und nach erfolgtem Start des Verbrennungsmotors als Generator betrieben werden. Die Kombination Starter/Generator spart eine der beiden üblicherweise hierfür eingesetzten Aggregate, nämlich Anlasser und Lichtmaschine.

Vorteilhaft ist auch der Einsatz der erfindungsgemäßen elektrische Maschine als generatorische Fahrzeugbremse, wobei die erzeugte Energie insbesondere zur Wiederverwendung gespeichert wird. Die Bremsenergie wird dabei ohne Zusatzaggregate, wie herkömmliche Retarder, in elektrische Energie umgewandelt, und zwar weitgehend verschleißfrei aufgrund der elektromagnetischen Kopplung der elektrischen Maschine. Grundsätzlich kann die dabei erzeugte Energie an Verbraucher direkt abgeführt oder anderweitig "verheizt" und/oder auch rekuperativ gespeichert werden.

Bei einer weiteren Variante hat die erfindungsgemäße elektrische Maschine auch die Funktion eines Antriebes des Fahrzeuges, insbesondere einer Antriebshilfe neben dem Verbrennungsmotor, bevorzugt als Beschleunigungsunterstützung (sog. Boosterfunktion). Der Verbrennungsmotor des Kraftfahrzeuges kann dabei von vornherein schwächer dimensioniert sein, was den Betrieb bei höherem effektiven Mitteldruck und folglich einen niedrigeren Kraftstoffverbrauch ermöglicht.

Vorzugsweise dient die elektrische Maschine der erfindungsgemäßen Antriebsanordnung auch als aktiver Drehschwingungsdämpfer, der insbesondere gegenphasig zu Drehungleichförmigkeiten im Antriebsstrang Wechseldrehmomente zur Kompensation der Drehungleichförmigkeiten erzeugt. Dabei kann der mit dem Gegenmoment beaufschlagte Rotor an- oder abtriebsseitig mit dem Antriebsstrang verbunden, d.h. der Schwingungsisolierung vor- oder nachgeschaltet, sein. Ist der Rotor beispielsweise abtriebsseitig gekoppelt, wird er mit einem gegenphasigen betragsgleichen Wechseldrehmoment beaufschlagt, um noch vorhandene, die Schwingungsisolierung übertretende Drehschwingungen zu kompensieren.

Hierbei wirkt sich die geringe Baugröße der erfindungsgemäßen elektrischen Maschine besonders günstig aus, da die elektrische Maschine selbst bei geringstem Platzangebot in unmittelbarer Nähe des Verbrennungsmotors untergebracht werden kann, also am Ort einer der Hauptschwingungs- bzw. -störquellen im Fahrzeug, dort, wo der Schwingungs- bzw. Geräuschbildung bereits in ihrem Ansatz einfach und effektiv entgegengewirkt werden kann.

Bei der Erzeugung eines den Drehungleichförmigkeiten entgegengesetzten Wechselmoments wird die elektrische Maschine periodisch abwechselnd als (beschleunigender) Elektromotor und als (bremsender) Generator betrieben. Die im Generatorbetrieb zurückgewonnene Energie kann vorteilhaft zwischengespeichert werden.

Die Erfindung erreicht das vorgenannte Ziel auch durch den Gegenstand nach Anspruch 15, also durch ein Verfahren zum Betreiben der erfindungsgemäßen Antriebsanordnung, bei welchem die elektrische Maschine eine oder mehrere der oben genannten Funktionen übernimmt. Für das Verfahren gelten die genannten Vorteile analog.

Weitere Vorteile und Ausgestaltungen der Erfindung ergeben sich aus der nachfolgenden Beschreibung bevorzugter Ausführungsbeispiele. In der Beschreibung wird auf die beigefügte schematische Zeichnung Bezug genommen.

Die einzige Figur zeigt im Querschnitt eine schematische Darstellung einer erfindungsgemäßen Antriebsanordnung mit einem Antriebsstrang eines Kraftfahrzeuges.

Die nachfolgende Beschreibung geht - lediglich aus Gründen einer einfachen Darstellung - von einem Antriebsstrang eines Kraftfahrzeug-Verbrennungsmotors aus, ohne sich jedoch darauf beschränken zu wollen. Die erfindungsgemäße Antriebsanordnung ist genauso gut für andere Antriebsysteme, z.B. Werkzeugmaschinen, geeignet.

Der Drehmomentübertragungsweg des dargestellten Antriebsstranges der Antriebsanordnung läuft von einem Verbrennungsmotor 2 über (hier nicht dargestellte) Elemente, wie etwa eine Kupplung, durch eine dazu funktionell parallel geschaltete elektrische Maschine 4 hindurch und über (hier nicht dargestellte) Elemente, wie etwa eine weitere Kupplung, Gelenkwellen, etc., zu einem Getriebe 6. Das Getriebe 6 treibt die Räder des Kraftfahrzeuges auf bekannte Art und Weise an.

Die im Drehmomentübertragungsweg des Antriebsstranges befindliche elektrische Maschine 4 weist einen ortsfesten, z.B. am Motorgehäuse oder an der Fahrzeugkarosserie befestigten, mit Statorspulen 8 bestückten Stator 10 sowie einen drehbeweglichen im Antriebsstrang angeordneten Rotor 12 auf. Dieser umfaßt ein äußeres ringförmiges Teil 14, welches die elektrischen bzw. magnetischen Funktionen des Rotors sowie die Funktion einer der beiden Grundelemente einer Schwingungsisolierung in einem Stück vereinigt und im folgenden Primärteil genannt wird. Das Primärteil 14 ist über Träger 15, z.B. in Form eines einseitigen Käfigs, mit der Antriebsseite des Antriebsstranges, hier mit einer Kurbelwelle des Verbrennungsmotors 2 ggf. über (nicht dargestellte) Kupplungen und/oder Verbindungswellen, drehfest verbunden. Ferner umfaßt der Rotor 12 ein inneres, zum Primärteil 14 konzentrisches und im wesentlichen scheibenförmigen Sekundärteil 18, das mit der Abtriebsseite des Antriebsstranges, welches zum Getriebe 6 führt, drehfest verbunden ist. Das Sekundärteil 18 geht dabei in eine Nabe über, die fest auf einer zum Getriebe 6 führenden, ggf. mit weiteren Wellen gekoppelten Welle 17 sitzt.

Die Antriebsstrangwellen sind vor und hinter der elektrischen Maschine 4 in Lagern 19, 20 geführt. Dies bedeutet, daß der Rotor 12 aufgrund der nur elastischen Kopplung zwischen Primär- und Sekundärteil lediglich einseitig gelagert ist.

Die elektrische Maschine 4 ist hier eine Asynchromaschine, deren Statorspulen 8 als Drehstromwicklung ausgebildet sind, die z.B. von einem Pulswechselrichter zur Erzeugung von Drehfeldern mit Strom geeigneter, frei einstellbarer Frequenz, Phase und/oder Amplitude gespeist werden. Der elektrisch bzw. magnetisch wirksame äußere Teil des Primärteils 14 bildet einen Kurzschluß-Käfigläufer mit in Axialrichtung verlaufenden Käfigstäben 21, die an ihren Enden durch je einen längs des Umfangs verlaufenden Leiter elektrisch und mechanisch verbunden sind. Bei Voreilung induzieren die äußeren Drehfelder im Kurzschlußläufer Ströme, wodurch ein Drehmoment auf den Läufer bzw. Rotor 12 ausgeübt wird.

Das Primärteil 14 und das Sekundärteil 18 des Rotors 12 sind um dieselbe Achse drehbar zueinander gelagert und über ein nur schematisch eingezeichnetes Schwingungsisolierungselement 22 drehelastisch miteinander gekoppelt. Das Schwingungsisolierungselement 22 besteht z.B. aus einer oder mehreren Spiraloder Schraubenfedern. Bei einer bevorzugten Variante umgreift dabei das innere Primärteil 14 das äußere Sekundärteil 18 in radialer Richtung soweit, daß das äußere Primärteil 14 auf bzw. gegenüber dem Sekundärteil 18 drehbar ist. Ferner sind zwischen Primär- und Sekundärteil 14, 18 mehrere Spiralfedern in Umfangsrichtung angeordnet und jeweils mit einem Ende am Primärteil 14 und mit ihrem anderen Ende am Sekundärteil 18 befestigt, so daß das Primär- und das Sekundärteil 14, 18 über die Spiralfedern drehelastisch miteinander gekoppelt sind.

Das Antriebsdrehmoment des Verbrennungsmotors 2 wird über die Kurbelwelle 16 auf das mit der Kurbelwelle 16 - über die Träger 15 - starr verbundene Primärteil 14 und über das Schwingungsisolierungselement 22 auf das Sekundärteil 18 übertragen; und von dort aus über die Welle 17 zum Getriebe 6. Etwaige Drehmomentschwankungen auf der Antriebsseite des Antriebsstranges, die auf die diskontinuierliche Arbeitsweise des Kolbenverbrennungsmotors zurückzuführen sind, werden durch das Schwingungsisolierungselement 22 im Rotor 12 der elektrischen Maschine 4 abgeschwächt, d.h. nicht bzw. nur in geringem Maße auf das Sekundärteil 18 und damit auf die Abtriebsseite des Antriebsstranges übertragen.

Wie bereits einleitend ausgeführt, ist die Schwingungsisolierung um so wirksamer, je mehr die Erregerfrequenz, hier die Frequenz der Drehmomentschwankungen des Verbrennungsmotors 2, über der Eigenfrequenz des Schwingungssystems liegt, d.h. je niedriger die Resonzfrequenz ist. Die zwangsläufig vorhandenen Massen - und folglich Trägheitsmomente - der Antriebsstrangwellen sowie die Massen des Primärund Sekundärteils definieren zusammen mit der Federsteifigkeit des Schwingungsisolierungselementes 22 die Resonanzfrequenz des vorliegenden Schwingungssystems. Falls diese nicht tief genug liegt, sind beispielsweise am Primärteil 14 (wie mit gestrichelten Linien angedeutet) und/oder am Sekundärteil 18 (nicht gezeichnet) ringförmige Zusatzmassen 24 vorgesehen, um die Eigenfrequenz des Antriebsstranges unterhalb des Erregerfrequenzbereiches zu verschieben.

Die elektrische Maschine 4 der erfindungsgemäßen Antriebsanordnung kann in einem Kraftfahrzeug auch die Funktion eines Anlassers zum Starten des Verbrennungsmotors und/oder einer Lichtmaschine zur Energieversorgung des Fahrzeuges übernehmen. Hierfür ist die elektrische Maschine 4 mit einer Steuervorrichtung 30 verbunden, welche die Erregerströme der Statorwicklungen 8 derart beeinflußt, daß bei Betätigen des Anlasserschlüssels die elektrische Maschine 4 als Motor (Anlasser) zum Anlassen des Verbrennungsmotors arbeitet und danach in einen Generatorbetrieb umgeschaltet wird.

Daneben kann die elektrischen Maschine 4 auch als generatorische Bremse zur verschleißfreien Fahrzeugbremsung mit Rekuperation der Bremsenergie (sog. Retarderfunktion) sowie als Antriebs- und Beschleunigungsunterstützung des Verbrennungsmotors (sog. Boosterfunktion) dienen.

Daneben kann die elektrische Maschine 4 auch als aktiver Drehschwingungsdämpfer dienen, also zur Kompensation von Drehungleichförmigkeiten im Antriebsstrang, die hauptsächlich auf Gas- und Massenkräfte des Verbrennungsmotors 2 zurückzuführen sind. Hierfür steuert die Steuervorrichtung 30 die Erregerströme der Statorwicklungen 8 derart, daß das auf das Primärteil 14 des Rotors 12 ausgeübte Drehmoment etwaigen Drehmomentschwankungen des Primärteils 14 - und damit der vom Verbrennungsmotor angetriebenen Kurbelwelle und ggf. damit gekoppelter Wellen - z.B. gegenphasig entgegenwirkt. Auf diese Weise werden Drehschwingungen bereits weitgehend aktiv kompensiert. Sollten dennoch etwaige Restschwingungen am Primärteil 14 verbleiben, werden diese durch das Schwingungsisolierungselement 22 zwischen Primär- und Sekundarteil von der Abtriebsseite abgeschirmt.

Wie in der Figur dargestellt, kann die aktive Schwingungsdämpfung geregelt erfolgen, z.B. ist ein Drehzahlsensor 32 an geeigneter Stelle in Nähe des Primärteils 14 angeordnet, um fortlaufend die momentane Drehzahl bzw. Winkelsegmentgeschwindigkeit des Primärteils 14 zu messen. Die vom Drehzahlsensor 32 erfaßten Momentandrehzahlen werden der Steuerung 30 zugeleitet, welche den Momentanwert mit einem vorgegebenen Sollwert vergleicht und darauf ein Regeldifferenzsignal als Maß für eine etwaige momentane oder periodische Drehungleichförmigkeit des Primärteils 14 erzeugt. Auf der Grundlage dieser Regeldifferenz werden die Erregerströme des Stators 10 derart gesteuert, daß das Primärteil 14 mit einem Wechselmoment gegenphasig betragsgleich zur Drehungleichförmigkeit beaufschlagt wird. Alternativ dazu ist auch eine gesteuerte aktive Dämpfung möglich, bei der die erwartete Drehungleichförmigkeit z.B. einem vorab gespeicherten Kennfeld entnommen wird und zur Erzeugung eines gegenphasig betragsgleichen Wechselmoments dient.

Selbstverständlich kann die elektrische Maschine 4 der erfindungsgemäßen Antriebsanordnung zur Schwingungsdämpfung und zur generatorischen Stromerzeugung gleichzeitig genutzt werden.

## Patentansprüche

1. Antriebsanordnung mit einem Antriebsstrang (16, 17) und einer dazu funktionell parallel geschalteten elektrischen Maschine (4), die einen Stator (10) und einen Rotor (12) aufweist, wobei im Drehmomentweg des Antriebsstranges (16, 17) eine Schwingungsisolierung (22) eingefügt ist, **dadurch gekennzeichnet, daß** der Rotor (12) der elektrischen Maschine (4) bezüglich seiner elektrischen und magnetischen Funktionen innen hohl ausgebildet und mit seinem radial außenliegenden Primärteil mit einer der Antriebs- und Abtriebsseite des Antriebsstranges (16, 17) und mit seinem radial innenliegenden Sekundärteil mit der anderen der Antriebs- und Abtriebsseite verbunden ist, und die Schwingungsisolierung im Hohlraum des Rotors (12) zwischen dessen Primär- und Sekundärteil untergebracht ist.

2. Antriebsanordnung nach Anspruch 1, **dadurch gekennzeichnet, daß** die Schwingungsisolierung mindestens zwei Grundelemente aufweist, wobei
- eines der Grundelemente (14) mit einer Antriebsseite und das andere Grundelement (18) mit einer Abtriebsseite des Antriebsstranges verbundenen ist; und
- die beiden Grundelemente (14, 18) drehelastisch, insbesondere über eine oder mehrere Schrauben- oder Spiralfedern (22), miteinander gekoppelt sind.

3. Antriebsanordnung nach Anspruch 1 oder 2, **dadurch gekennzeichnet, daß** der Rotor (12) ringförmig ausgebildet und die Schwingungsisolierung hierzu konzentrisch und innerhalb des Rotors (12) angeordnet ist.

4. Antriebsanordnung nach Anspruch 2 oder 3, **dadurch gekennzeichnet, daß** an einem oder jedem der Grundelemente (14, 18) jeweils eine oder mehrere Schwungmassen (24) vorgesehen sind.

5. Antriebsanordnung nach Anspruch 4, **dadurch gekennzeichnet, daß** die Schwungmassen (24) drehelastisch, insbesondere über eine Elastomerschicht, mit dem jeweiligen Grundelement (14, 18) gekoppelt sind.

6. Antriebsanordnung nach einem der Ansprüche 2 bis 5, **dadurch gekennzeichnet, daß** Reibflächen zwischen drehelastisch gelagerten Teilen der Grundelemente (14, 18), zumindest abschnittsweise, vorgesehen sind.

7. Antriebsanordnung nach einem der Ansprüche 2 bis 6, **dadurch gekennzeichnet, daß** eines der Grundelemente (14; 18) mit dem Rotor (12) drehtfest gekoppelt ist.

8. Antriebsanordnung nach einem der vorstehenden Ansprüche, **dadurch gekennzeichnet, daß** der Rotor (12) einseitig gelagert ist.

9. Antriebsanordnung nach einem der vorstehenden Ansprüche, **dadurch gekennzeichnet, daß** die elektrische Maschine (4) eine Drehfeldmaschine in Asynchron- oder Synchronbauweise ist, und der Rotor (12) ein Kurzschlußschläufer oder ein Rotor mit ausgeprägten Magnetpolen ist.

10. Antriebsanordnung nach einem der vorstehenden Ansprüche, bei welcher die elektrische Maschine (4) als Starter zum Starten, insbesondere Direktstarten, eines Verbrennungsmotors dient.

11. Antriebsanordnung nach einem der vorstehenden Ansprüche, bei welcher die elektrische Maschine (4) auch als Generator zur Versorgung elektrischer Verbraucher und/oder mindestens einer Fahrzeugbatterie dient.

12. Antriebsanordnung nach einem der vorstehenden Ansprüche, bei welcher die elektrische Maschine (4) auch als generatorische Fahrzeugbremse dient, wobei die erzeugte Energie insbesondere zur Wiederverwendung gespeichert wird.

13. Antriebsanordnung nach einem der vorstehenden Ansprüche, bei welcher die elektrische Maschine (4) auch als Antrieb eines Fahrzeuges, insbesondere als Antriebshilfe, bevorzugt als Beschleunigungsunterstützung, des Fahrzeuges neben dem Verbrennungsmotor, dient.

14. Antriebsanordnung nach einem der vorstehenden Ansprüche, bei welcher die elektrische Maschine (4) auch als aktiver Drehschwingungsdämpfer dient, der insbesondere gegenphasig zu Drehungleichförmigkeiten im Antriebsstrang Wechseldrehmomente zur Kompensation der Drehungleichförmigkeiten erzeugt.

15. Verfahren zum Betreiben einer Antriebsanordnung nach einem der Ansprüche 1 bis 9, bei welchem die elektrische Maschine (4) eine oder mehrere der in den Ansprüchen 10 bis 14 angegebenen Funktionen ausführt.

## Claims

1. A drive arrangement having a drive train (16, 17) and an electric machine (4) which is connected functionally in parallel thereto and which comprises a stator (10) and a rotor (12), with a vibration insulation (22) being inserted in the torque path of the drive train (16, 17),
**characterised in that** the rotor (12) of the electric machine (4) has a hollow internal construction with respect to its electrical and magnetic functions and is connected by its radially outer primary part with one of the drive and driven sides of the drive train (16, 17) and by its radially inner secondary part with the other drive and driven side, and the vibration insulation is accommodated in the cavity of the rotor (12) between its primary and secondary parts.

2. A drive arrangement according to Claim 1,
**characterised in that** the vibration insulation comprises at least two basic elements, wherein
- one of the basic elements (14) is connected to a drive side and the other basic element (18) is connected to a driven side of the drive train; and
- the two basic elements (14, 18) are coupled to one another in torsionally elastic manner, in particular via one or more coil or flat spiral springs (22).

3. A drive arrangement according to Claim 1 or 2,
**characterised in that** the rotor (12) has an annular construction and the vibration insulation is disposed concentrically thereto and inside the rotor (12).

4. A drive arrangement according to Claim 2 or 3,
**characterised in that** one or more gyrating masses (24) are provided at one or each of the basic elements (14, 18).

5. A drive arrangement according to Claim 4,
**characterised in that** the gyrating masses (24) are coupled in a torsionally elastic manner, in particular via an elastomer layer, to the respective basic element (14, 18).

6. A drive arrangement according to one of Claims 2 to 5,
**characterised in that** friction faces are provided, at least in some sections, between parts of the basic elements (14, 18) that are mounted in torsionally elastic manner.

7. A drive arrangement according to one of Claims 2 to 6,
**characterised in that** one of the basic elements (14; 18) is connected to the rotor (12) in a torsionally secure manner.

8. A drive arrangement according to one of the preceding Claims,
**characterised in that** the rotor (12) is mounted on one side.

9. A drive arrangement according to one of the preceding Claims,
**characterised in that** the electric machine (4) is a rotary field machine in induction or synchronous design, and the rotor (12) is a squirrel-cage rotor or a rotor with distinctive magnetic poles.

10. A drive arrangement according to one of the preceding Claims, in which the electric machine (4) serves as a starter for starting, in particular directly staring, an internal combustion engine.

11. A drive arrangement according to one of the preceding Claims, in which the electric machine (4) also serves as a generator for supplying electric consumers and/or at least one vehicle battery.

12. A drive arrangement according to one of the preceding Claims, in which the electric machine (4) also serves as a generator-type vehicle brake, whereby the generated energy is accumulated in particular to be reused.

13. A drive arrangement according to one of the preceding Claims, in which the electric machine (4) also serves as the drive of a vehicle, in particular as a drive aid, preferably as an acceleration support, to the vehicle in addition to the internal combustion engine.

14. A drive arrangement according to one of the preceding Claims, in which the electric machine (4) also serves as an active torsional vibration damper, which generates alternating torques, in particular in counter-phase to rotational non-uniformities in the drive train, for the compensation of the rotational non-uniformities.

15. A method for operating a drive arrangement according to one of Claims 1 to 9, in which the electric machine (4) performs one or more functions given in Claims 10 to 14.

## Revendications

1. Dispositif d'entraînement comportant une chaîne motrice (16, 17) et une machine électrique (4) branchée en parallèle avec cette chaîne motrice du point de vue fonctionnel et qui comporte un stator (10) et un rotor (12), un dispositif (22) d'isolation des vibrations étant inséré dans le trajet de transmission du couple de la chaîne motrice (16, 17), **caractérisé en ce que** le rotor (12) de la machine électrique (4) est agencé de manière à être creux, en rapport avec ses fonctions électriques et magnétiques, et est relié, par sa partie primaire disposée extérieurement du point de vue radial, à l'un du côté d'entraînement et du côté entraîné de la chaîne motrice (16, 17) et, par sa partie secondaire située intérieurement du point de vue radial, à l'autre du côté d'entraînement et du côté entraîné, et que le dispositif d'isolation vis-à-vis des vibrations est logé dans la cavité du rotor (12) entre sa partie primaire et sa partie secondaire.

2. Dispositif d'entraînement selon la revendication 1, **caractérisé en ce que** le dispositif d'isolation vis-à-vis des vibrations comporte au moins deux éléments de base, parmi lesquels :
- l'un des éléments de base (14) est relié à un côté d'entraînement et l'autre élément de base (18) est relié à un côté mené de la chaîne motrice; et
- ces éléments de base (14,18) sont couplés entre eux, avec une élasticité de rotation, notamment par l'intermédiaire d'un ou de plusieurs ressorts hélicoïdaux (22).

3. Dispositif d'entraînement selon la revendication 1 ou 2, **caractérisé en ce que** le rotor (12) est agencé avec une forme annulaire et que le dispositif d'isolation vis-à-vis des vibrations est disposé concentriquement au rotor (12) et à l'intérieur de ce dernier.

4. Dispositif d'entraînement selon la revendication 2 ou 3, **caractérisé en ce qu'**une ou plusieurs masses d'inertie respectives (24) sont prévues sur un élément de base ou sur chacun des éléments de base (14,18).

5. Dispositif d'entraînement selon la revendication 4, **caractérisé en ce que** les masses d'inertie (24) sont accouplées avec une élasticité de rotation, notamment par l'intermédiaire d'une couche d'élastomère, à l'élément de base respectif (14,18).

6. Dispositif d'entraînement selon l'une des revendications 2 à 5, **caractérisé en ce que** des surfaces de friction sont prévues au moins par endroits entre des parties, supportées avec une élasticité de rotation, des éléments de base (14,18).

7. Dispositif d'entraînement selon l'une des revendications 2 à 6, **caractérisé en ce que** l'un des éléments de base (14;18) est couplé solidairement en rotation au rotor (12).

8. Dispositif d'entraînement selon l'une des revendications précédentes, **caractérisé en ce que** le rotor (12) est tourillonné unilatéralement.

9. Dispositif d'entraînement selon l'une des revendications précédentes, **caractérisé en ce que** la machine électrique (4) est une machine à champ tournant du type asynchrone ou synchrone, et que le rotor (12) est une bague coulissante de court-circuit ou un rotor comportant des pôles magnétiques saillants.

10. Dispositif d'entraînement selon l'une des revendications précédentes, dans lequel la machine électrique (4) est utilisée en tant que démarreur pour le démarrage, notamment pour le démarrage direct, d'un moteur à combustion interne.

11. Dispositif d'entraînement selon l'une des revendications précédentes, dans lequel la machine électrique (4) est également utilisée comme générateur pour alimenter des appareils d'utilisation électriques et/ou au moins une batterie du véhicule.

12. Dispositif d'entraînement selon l'une des revendications précédentes, dans lequel la machine électrique (4) est utilisée en tant que frein du véhicule fonctionnant en générateur, l'énergie produite étant accumulée notamment pour sa réutilisation.

13. Dispositif d'entraînement selon l'une des revendications précédentes, dans lequel la machine électrique (4) est également utilisée en tant que système d'entraînement d'un véhicule, notamment un système auxiliaire d'entraînement, de préférence en tant que système d'assistance à l'accélération, du véhicule en dehors du moteur à combustion interne.

14. Dispositif d'entraînement selon l'une des revendications précédentes, dans lequel la machine électrique (4) est également utilisée en tant qu'amortisseur actif de vibrations de rotation, qui produit, notamment en opposition de phase avec des irrégularités de rotation dans la chaîne motrice, des couples alternatifs servant à compenser les irrégularités de rotation.

15. Procédé pour faire fonctionner un dispositif d'entraînement selon l'une des revendications 1 à 9, dans lequel la machine électrique (4) exécute une ou plusieurs fonctions indiquées dans les revendications 10 à 14.
